# DEMANDE DE BREVET EUROPEEN

(11) **EP 4 685 443 A1**
(43) Date de publication de la demande: **28.01.2026**
(21) Numéro de dépôt: 25191022.0
(22) Date de dépôt: 22.07.2025
(51) Int. Cl.: G01F 15/063, F17D 5/06, G01F 15/075, G01N 29/024

(54) **CALCULATEUR, DISPOSITIF ET PROCÉDÉ DE CARACTÉRISATION DE SITUATIONS ASSOCIÉES À LA PRÉSENCE DE GAZ DANS UN MODULE DE MESURE DE LA CONSOMMATION D'UN LIQUIDE**

(30) Priorité: 22.07.2024 FR 2408038
(71) Demandeur: Birdz, 94410 Saint-Maurice (FR)
(72) Inventeur: Paquet, François, 94410 Saint-Maurice (FR); Duchamp, Julien, 94410 Saint-Maurice (FR); Gindre, Edouard, 94410 Saint-Maurice (FR)
(74) Mandataire: Aquinov

(57) **Abrégé**

L'invention concerne un calculateur (2) pour la caractérisation de situations associées à la présence de gaz dans un module de mesure (C) de la consommation d'un liquide, le calculateur étant apte à recevoir des informations (Dᵢ) représentatives du débit d'un liquide passant au travers du module de mesure et des informations (Gᵢ) relatives à la présence de gaz dans le module de mesure ;
le calculateur étant configuré pour détecter, à partir des informations représentatives du débit du liquide passant au travers du module de mesure et des informations relatives à la présence de gaz dans le module de mesure pendant une première période donnée (P₁), la ou les occurrences d'une ou plusieurs situations (Sⱼ) au cours de ladite première période, parmi un ensemble de situations prédéterminées (Sⱼ).

## Description

L'invention concerne le domaine de l'analyse de la consommation d'un réseau de circulation d'un fluide de type liquide. Plus précisément, l'invention concerne un calculateur, un dispositif et un procédé de caractérisation de situations associées à la présence de gaz dans un module de mesure de la consommation d'un liquide.

Dans certains secteurs, il est nécessaire de connaître périodiquement, par exemple chaque jour, la consommation d'un réseau de circulation d'un liquide. C'est par exemple le cas pour un réseau hydraulique, pour lequel il est nécessaire de comptabiliser le volume d'eau consommé chaque jour au niveau de chacun des points de distribution locaux de ce réseau. Cela peut également être le cas pour un réseau d'énergie thermique employant un liquide comme de l'eau ou de l'huile ou un réseau d'eau sanitaire ou encore un réseau de transport de gaz liquéfié.

Des instruments de comptage, ou autres instruments de mesure, sont ainsi implantés sur le lieu de consommation du liquide, par exemple au niveau d'une vanne contrôlant l'arrivée du liquide ou à l'entrée d'un secteur du réseau de distribution, afin de réaliser des relevés de consommation périodiques. Les informations résultant de ces mesures sont ainsi transmises à un gestionnaire, lequel peut alors les exploiter par exemple pour évaluer si la situation de consommation est normale ou requiert une action ou une stratégie de distribution particulière.

Toutefois, les données relatives à la consommation du liquide peuvent être compromises dans des situations particulières, au niveau de l'instrument de comptage lui-même. C'est notamment le cas lorsqu'un gaz est présent dans l'instrument de comptage, et vient perturber l'écoulement du liquide dans le compteur. Le gaz peut ainsi venir créer une instabilité dans la mesure de l'instrument de comptage, en perturbant par exemple de façon inhomo-gène la propagation d'un signal ultrasonore destiné à réaliser cette mesure.

Il est donc nécessaire pour le gestionnaire, au-delà de la détection d'un gaz dans le compteur, de pouvoir caractériser la présence de gaz dans le compteur afin de lui permettre d'identifier les causes associées à cette présence de gaz, et le cas échéant de pouvoir apprécier la précision des données qui lui sont transmises, la gravité de la situation et de pouvoir prendre des mesures appropriées, comme optimiser la stratégie de distribution ou alerter le consommateur.

Il existe ainsi un besoin pour un dispositif qui permette de caractériser différentes situations liées à la présence de gaz dans un module de mesure de la consommation d'un liquide.

La présente invention se place dans ce contexte et vise à répondre à ce besoin.

A ces fins, l'invention a pour objet un calculateur pour la caractérisation de situations associées à la présence de gaz dans un module de mesure de la consommation d'un liquide, le calculateur étant apte à recevoir des informations représentatives du débit d'un liquide passant au travers du module de mesure et des informations relatives à la présence de gaz dans le module de mesure.

Le calculateur selon l'invention est configuré pour détecter, à partir des informations représentatives du débit du liquide passant au travers du module de mesure et des informations relatives à la présence de gaz dans le module de mesure pendant une première période donnée, la ou les occurrences d'une ou plusieurs situations au cours de ladite première période, parmi un ensemble de situations prédéterminées.

L'invention se propose ainsi de discriminer, et de caractériser différentes typologies de situations associées à la présence totale ou partielle de gaz au sein du module de mesure, à partir de différentes informations pouvant être mesurées directement ou indirectement par un ou plusieurs capteurs du module de mesure, comme le débit du liquide passant au travers du module de mesure et la présence de gaz dans le module de mesure, et éventuellement d'autres caractéristiques comme la température.

Ces situations associées à la présence de gaz dans le module de mesure trouvent leurs causes dans différents phénomènes. Par exemple, dans le contexte d'un réseau de distribution d'eau, la présence d'air dans le compteur peut traduire différents phénomènes, comme une rupture de la distribution d'eau, notamment en cas de stress hydrique ou d'un circuit placé hors gel, évènements indiqués par une situation de plein air dans le compteur ; ou encore une fraude, une dégradation du compteur ou encore une incapacité du compteur à mesurer des débits importants, situations qui se traduisent par des phénomènes de cavitation dans le compteur.

A l'aide des informations transmises par le module de mesure, le calculateur peut ainsi caractériser la présence d'air et ainsi estimer quelle est la situation qui peut être associée à cette présence d'air, de sorte qu'il soit possible d'alerter un gestionnaire du réseau de liquide afin qu'il puisse apprécier la précision des données qui lui sont transmises, la gravité de la situation et qu'il puisse prendre des mesures appropriées. On notera que l'invention présente également comme avantage d'exploiter des mesures réalisées par des capteurs classiquement présent dans un module de mesure du débit d'un liquide, et ne nécessite donc aucune adaptation matérielle du module de mesure.

De préférence, le liquide est de l'eau, notamment potable ou usée, et le gaz est de l'air. En variante, le liquide est un liquide caloporteur, ou un liquide de refroidissement, ou une huile, ou un gaz liquéfié.

Dans le contexte de la présente invention, et à titre d'exemple non limitatif, on entend par « calculateur équipé d'une mémoire » un ou plusieurs composants électroniques et/ou logiciels conçus pour réaliser des opérations de calcul de données, de comparaison de données et de stockage de données dans une mémoire informatique. On pourra prévoir que le calculateur soit équipé d'un ou plusieurs microcontrôleurs et/ou processeurs, agencés pour exécuter des instructions d'un ou plusieurs programmes informatiques afin de mettre en œuvre des étapes de détection, de stockage et de transmission de données.

Dans le contexte de la présente invention, et à titre d'exemple non limitatif, on entend par « informations représentative du débit du liquide passant au travers du module de mesure » toute séquence temporelle d'informations, mesures ou données, horodatées, de nature analogique et/ou numérique, permettant d'indiquer, de façon absolue ou relative, de façon instantanée ou cumulée, l'évolution d'une quantité d'un liquide, d'un débit d'un liquide ou d'une vitesse d'un liquide transitant par le module de mesure pendant une période temporelle, ou encore toute information, mesure ou donnée ponctuelle, horodatée, de nature analogique et/ou numérique, permettant d'indiquer, de façon absolue ou relative, de façon instantanée ou cumulée, l'évolution d'une quantité d'un liquide, d'un débit d'un liquide ou d'une vitesse d'un liquide transitant par le module de mesure à un instant donné d'une période temporelle. Il pourra indifféremment s'agit d'une séquence de mesures indiquant chacune le volume de liquide ayant transité par le module de mesure depuis la mesure précédente, ou encore une séquence de mesures indiquant chacune le volume cumulé de liquide ayant transité par le module de mesure depuis un instant initial, ou encore une séquence de mesures indiquant chacune le débit de liquide ou la vitesse d'écoulement de liquide transitant par le module de mesure. Lesdites informations pourront être transmises périodiquement par le module de mesure, par exemple toutes les secondes, ou être transmises ponctuellement par le module de mesure, sur requête du calculateur ou d'un autre élément, ou suite à la validation d'une condition donnée, comme une détection de gaz par le module de mesure.

Dans le contexte de la présente invention, et à titre d'exemple non limitatif, on entend par « informations relatives à la présence de gaz dans le module de mesure» toute séquence temporelle d'informations, mesures ou données, de nature analogique et/ou numérique, permettant d'indiquer la présence de gaz dans le module de mesure pendant une période temporelle. Il pourra par exemple s'agir d'une séquence d'informations binaires indiquant la présence ou l'absence de gaz dans le module de mesure à chaque instant de la période ou encore une séquence de mesures indiquant la quantité de gaz dans le module de mesure à chaque instant de la période.

On pourra indifféremment prévoir que les informations représentatives du débit d'un liquide passant au travers du module de mesure et les informations relatives à la présence de gaz dans le module de mesure soient issues d'un même capteur, l'une de ces informations pouvant être déterminée à partir de l'autre de ces informations ; ou en variante soient issues de capteurs distincts.

Avantageusement, le calculateur est configuré pour caractériser l'occurrence de la situation détectée, à partir des informations représentatives du débit du liquide passant au travers du module de mesure et des informations relatives à la présence de gaz dans le module de mesure pendant ladite première période donnée.

La caractérisation désigne le processus de détection, de quantification et de classification des occurrences de présence de gaz dans le module de mesure de la consommation d'un liquide, au-delà d'une simple détection binaire. La caractérisation consiste à classer les mesures de plusieurs paramètres mesurés, notamment le débit du liquide avant l'apparition du gaz, la durée de présence du gaz, et la fréquence des occurrences de présence de gaz dans le module de mesure de la consommation, pour pouvoir classer chaque occurrence dans une catégorie spécifique et surcatégoriser différentes évènements prédéfinis tels que le plein air, la cavitation à haut débit, ou la cavitation à débit usuel.

Cette caractérisation initiale, effectuée au niveau du module de mesure, fournit des données structurées qui peuvent ensuite être transmises à un exploitant ou un fournisseur de service. Ces données catégorisées permettent une surcaractérisation, c'est-à-dire une analyse plus approfondie visant à discriminer ou identifier précisément l'évènement ayant causé les résultats de mesure. Cette surcaractérisation permet d'interpréter les données dans un contexte plus large, notamment en prenant en compte des facteurs externes au module de mesure, tels que les conditions du réseau ou les données historiques.

Dans un mode de réalisation de l'invention, le calculateur est configuré pour détecter ladite ou lesdites occurrences d'une ou plusieurs situations lorsque les informations relatives à la présence de gaz dans le module de mesure indiquent qu'un gaz est présent dans le module de mesure et par comparaison desdites informations représentative du débit d'un liquide passant au travers du module de mesure à une ou plusieurs plages de valeurs prédéterminées, chaque plage étant associée à l'une des situations prédéterminées dudit ensemble.

Selon un mode de réalisation, les plages sont dépourvues de tout recouvrement entre elles. Selon cet exemple, chaque situation est ainsi discriminée par une combinaison unique d'une détection de gaz et d'au moins une plage de valeurs. En d'autres termes, en l'absence de détection de gaz et/ou lorsque les informations relatives au débit du liquide sont situées en dehors desdites plages, le calculateur ne détecte aucune occurrence d'une quelconque situation dudit ensemble.

Par exemple, dans un contexte d'un compteur d'eau, on pourra prévoir qu'une première situation soit associée à une présence d'air combinée à un débit mesuré comme étant inférieur à une première valeur seuil donnée, qu'une deuxième situation soit associée à une présence d'air combinée à un débit mesuré comme appartenant à une plage s'étendant entre la première valeur seuil et une deuxième valeur seuil donnée et qu'une troisième situation soit associée à une présence d'air combinée à un débit mesuré comme étant supérieur à ladite deuxième valeur seuil.

Dans cet exemple, la première situation indique ainsi une situation de plein air selon laquelle le compteur d'eau est rempli totalement ou quasiment d'air, cette situation pouvant être provoquée par une rupture de la distribution d'eau ; la troisième situation indique une cavitation à très haut débit occasionnant l'apparition de bulles d'air instables au sein du compteur, cette situation pouvant être provoquée par une inadaptation de la capacité de mesure du compteur au débit de l'eau ; et la seconde situation indique une cavitation dans les débits usuels pour lesquels il ne devrait pas y avoir de cavitation, cette situation étant provoquée par exemple par une poche d'air délivrée au compteur ou une fraude. On pourra concevoir d'autres segmentations des plages de débit, notamment avec plus de trois plages, sans sortir du cadre de la présente invention.

Dans un mode de réalisation de l'invention, le calculateur est apte à recevoir des informations relatives à la température du liquide passant au travers du module de mesure et il est configuré pour détecter, à partir des informations représentatives du débit du liquide et à la température du liquide passant au travers du module de mesure et des informations relatives à la présence de gaz dans le module de mesure pendant ladite première période, ladite ou lesdites occurrences d'une ou plusieurs situations au cours de ladite première période, parmi ledit ensemble de situations prédéterminées. Dans cet exemple, il est possible de compléter la discrimination des situations à l'aide d'une donnée supplémentaire, à savoir la température au sein du module de mesure. Cette température peut notamment permettre de distinguer une situation dans laquelle de l'air est détecté alors que la température est inférieure à une valeur seuil donnée, cette situation indiquant un évènement de purge ou de mise hors gel du réseau au niveau du module de mesure, voire d'absence de risque pour le module de mesure en présence de gel.

On pourra concevoir d'ajouter des capteurs supplémentaires afin de discriminer d'autres types de situation, sans sortir du cadre de la présente invention.

Dans un mode de réalisation de l'invention, le calculateur comporte une mémoire et il est configuré pour stocker, notamment périodiquement, dans ladite mémoire, en fonction de chaque situation détectée, des données représentatives du débit du liquide passant au travers du module de mesure et à la durée de présence de gaz dans le module de mesure selon une structure de données de ladite mémoire, ladite structure de données étant associée à ladite situation détectée.

Dans le contexte de la présente invention, et à titre d'exemple non limitatif, on entend par «structure de données associée à une situation détectée » toute structure, organisation, ou mode de gestion de données selon laquelle des données peuvent être stockées dans une mémoire informatique, et susceptible d'être associé à ou de référencer une situation pouvant être détectée par le calculateur. Il pourra indifféremment s'agir d'un tableau ou d'une matrice, d'une liste chaînée, d'une pile, d'une file, d'un arbre ou d'un graphe. En d'autres termes, lesdites données relatives à une situation donnée sont stockées dans la mémoire du calculateur, selon une structure de données propre à cette situation, uniquement lorsque ladite situation a été détectée, et dans des emplacements de ladite mémoire, propres à cette situation. Une durée pourra par exemple être stockée selon une structure de données sous forme relative, par exemple sous la forme d'un intervalle de temps depuis un instant donné, comme l'instant d'apparition du gaz dans la période précédant chaque étape de stockage ; ou en variante sous forme absolue, comme une heure fournie par une horloge du calculateur.

Les informations permettant de caractériser chacune des situations caractérisées sont ainsi concaténées de façon synthétique selon des structures de données propres à chacune de ces situations. Il est ainsi possible d'éviter un stockage et/ou une transmission continue de l'ensemble des mesures réalisées par les différents capteurs du module de mesure, et d'assurer la frugalité du calculateur et de faciliter son intégration au sein des modules de mesure existants. On pourra prévoir que lesdites données soient stockées dans la mémoire, selon une structure de données, de façon périodique, par exemple au fur et à mesure de la réception desdites informations par le calculateur, ou de façon ponctuelle.

Les données stockées en mémoire selon ces structures de données peuvent ainsi être transmises, périodiquement ou sur requête, à un gestionnaire de distribution du réseau de liquide, lequel peut alors exploiter ces données pour apprécier chacune des situations détectées, notamment au regard de leur durée, et bénéficier d'éléments de décision lui permettant de détecter et d'identifier une anomalie, par exemple pour définir s'il y a une fraude, si un changement de stratégie de distribution locale est nécessaire, comme une limitation physique de débit, et de vérifier la fiabilité du module de mesure et le cas échéant, de remplacer ce module de mesure par un module plus adapté, soit dans sa gamme de mesure soit dans sa technologie de mesure.

On pourra notamment prévoir que le calculateur cumule ou incrémente des données d'une même nature dans la mémoire selon la structure de données et/ou remplace des données par de nouvelles données de même nature dans la mémoire selon la structure de données. Par exemple, chaque structure de données pourra définir une organisation de données selon une chaîne ou une matrice de données. On pourra prévoir que les structures de données soient identiques et définissent des organisations de données de même type similaire pour toutes les situations ou que les structures de données soient distinctes d'une situation à une autre.

Dans un mode de réalisation de l'invention, le calculateur est configuré pour détecter ladite ou lesdites occurrences d'une ou plusieurs situations à partir des informations représentatives du débit du liquide passant au travers du module de mesure et des informations relatives à la présence de gaz dans le module de mesure pendant la période précédant chaque étape de stockage, et pour stocker, à l'issue de ladite période, lesdites données représentatives du débit du liquide passant au travers du module de mesure et à la durée de présence de gaz dans le module de mesure selon ladite structure de données associée à ladite situation détectée.

Dans ce mode de réalisation, les informations reçues par le calculateur sont stockées, par exemple dans la mémoire, tout le long de ladite période, à l'issue de laquelle le calculateur met en œuvre les étapes de détection à partir de tout ou partie de ces informations, et le cas échéant de stockage desdites données selon la structure de données appropriée. Avantageusement, le calculateur pourra être configuré pour déterminer lesdites données à partir de tout ou partie de ces informations. On pourra notamment prévoir que ladite durée de présence de gaz dans le module de mesure soit une durée mesurée depuis l'instant d'apparition du gaz dans la période précédant chaque étape de stockage.

Selon un exemple de réalisation de l'invention, lors de la mise en œuvre de chaque étape de stockage, le calculateur est configuré pour remplacer tout ou partie des données stockées selon ladite structure de données associée à la situation détectée, par une ou plusieurs données déterminées à partir de tout ou partie des informations représentatives du débit du liquide passant au travers du module de mesure et des informations relatives à la présence de gaz dans le module de mesure pendant ladite période précédant cette étape de stockage. Cette caractéristique permet au calculateur d'obtenir une représentation synthétique de chacune des situations détectées en ne conservant que les données pertinentes qui caractérisent ces situations.

Par exemple, lors de la mise en œuvre de chaque étape de stockage, le calculateur pourra être configuré pour remplacer tout ou partie des données stockées selon ladite structure de données associée à la situation détectée, par de nouvelles données calculées à partir des données stockées lors de l'étape de stockage précédente et/ou des informations représentatives du débit du liquide passant au travers du module de mesure et des informations relatives à la présence de gaz dans le module de mesure pendant ladite période précédant cette étape de stockage. Il pourra par exemple d'agir d'un cumul des durées de toutes les occurrences de la situation détectée depuis le début de ladite première période, ou encore de la dernière mesure du débit reçue par le calculateur, ou encore de la valeur maximale entre une durée stockée dans la structure de données et une nouvelle durée calculée à partir des informations représentatives du débit du liquide passant au travers du module de mesure et des informations relatives à la présence de gaz dans le module de mesure pendant ladite période précédant cette étape de stockage.

Dans un mode de réalisation de l'invention, lors de la mise en œuvre de chaque étape de stockage, le calculateur est configuré pour remplacer une donnée représentative du débit du liquide passant au travers du module de mesure, stockée selon ladite structure de données associée à la situation détectée, par une donnée représentative du débit du liquide passant au travers du module de mesure pendant ladite période précédant cette étape de stockage.

Par exemple, lorsqu'une situation est détectée, le calculateur stocke systématiquement, selon la structure de données associée à cette situation, le dernier débit mesuré avant la présence d'air dans le module de mesure pendant la période précédant l'étape de stockage, en remplaçant la valeur de ce débit qui a été stockée lors de la détection précédente de cette situation. Cette caractéristique permet ainsi d'obtenir une donnée de débit caractérisant la plage d'utilisation du compteur avant l'apparition d'air et ainsi d'identifier le contexte de la détection d'air au regard de cette situation. On pourra en variante prévoir de remplacer cette valeur par le dernier débit mesuré pendant la période précédant l'étape de stockage, par la valeur maximale entre cette valeur et le dernier débit mesuré, ou encore par la valeur maximum du débit mesuré pendant la période précédant l'étape de stockage avant que de l'air soit présent dans le module de mesure.

Alternativement ou cumulativement, lors de la mise en œuvre de chaque étape de stockage, le calculateur est configuré pour incrémenter un compteur d'occurrence stocké selon ladite structure de données associée à la situation détectée. Cette caractéristique permet ainsi de stocker, selon chaque structure de données, le nombre d'occurrence de la situation associée à cette structure pendant ladite première période et/ou le nombre d'occurrence de présence de gaz liée à la situation associée à cette structure pendant ladite première période.

Alternativement ou cumulativement, lors de la mise en œuvre de chaque étape de stockage, le calculateur est configuré pour remplacer une valeur d'une durée d'occurrence stockée selon ladite structure de données associée à la situation détectée, par la plus grande valeur entre cette valeur stockée et une durée de présence de gaz dans le module de mesure pendant ladite période précédant cette étape de stockage, cette durée de présence étant estimée à partir des informations relatives à la présence de gaz dans le module de mesure. Cette durée de présence pourra par exemple correspondre à la durée pendant laquelle les informations relatives à la présence de gaz dans le module de mesure indiquent que du gaz est présent dans le module de mesure pendant ladite période précédant l'étape de stockage. Dans cet exemple, le calculateur stocke ainsi selon chaque structure de données la plus grande des durées des occurrences de la situation associée pendant ladite première période.

Alternativement ou cumulativement, lors de la mise en œuvre de chaque étape de stockage, le calculateur est configuré pour remplacer une valeur d'une durée cumulée stockée selon ladite structure de données associée à la situation détectée, par la somme de cette valeur stockée et une durée de présence de gaz dans le module de mesure pendant ladite période précédant cette étape de stockage, cette durée de présence étant estimée à partir des informations relatives à la présence de gaz dans le module de mesure. Dans cet exemple, la mémoire contient, selon chaque structure de données, une durée cumulée, depuis le début de la première période, de présence de gaz dans le module de mesure, liée à la situation associée à cette structure de données. En variante, le calculateur pourra être configuré pour remplacer une valeur de durée cumulée stockée selon ladite structure de données associée à la situation détectée, par la somme de la dernière valeur de durée cumulée stockée dans l'une desdites structures de données, lors de l'étape de stockage suivant la dernière détection d'une situation dudit ensemble, et la durée de présence de gaz dans le module de mesure pendant ladite période précédant cette étape de stockage, cette durée de présence étant estimée à partir des détections du deuxième capteur. En d'autres termes, la valeur de durée cumulée correspond au cumul de l'ensemble des durées pendant laquelle du gaz est détecté par le deuxième capteur pendant la première période .

Alternativement ou cumulativement, lors de la mise en œuvre de chaque étape de stockage et lorsque les informations relatives à la présence de gaz dans le module de mesure indiquent que du gaz est présent dans le module de mesure à l'instant correspondant à la fin de la période précédant cette étape de stockage, le calculateur est configuré pour remplacer une valeur d'une durée en-cours stockée selon ladite structure de données associée à la situation détectée, par une durée de présence de gaz dans le module de mesure jusqu'audit instant, cette durée de présence étant estimée à partir des informations relatives à la présence de gaz dans le module de mesure. De préférence, dans le cas où les informations relatives à la présence de gaz dans le module de mesure indiquent l'absence de gaz dans le module de mesure à l'instant correspondant à la fin de la période précédant cette étape de stockage, le calculateur est configuré pour remplacer une valeur de durée en-cours stockée selon ladite structure de données associée à la situation détectée, par une valeur nulle. En d'autres termes, selon cette caractéristique, si l'occurrence de la situation qui a été détectée perdure lors de l'étape de stockage, la durée de présence du gaz jusqu'à cette étape de stockage est stockée selon la structure de données associée, notamment afin d'assurer une continuité dans l'horodatage entre une première période et la première période suivante.

Avantageusement, au début et/ou à l'issue de la première période, le calculateur est configuré pour réinitialiser dans sa mémoire tout ou partie des emplacements en mémoire correspondant à chacune des structures de données associées aux situations dudit ensemble. On s'assure ainsi que les informations stockées selon les structures de données présentent des amplitudes faibles et puissent donc être stockées et transmises sur un nombre limité de bits, afin de renforcer encore la frugalité du dispositif.

L'invention a également pour objet un dispositif pour la caractérisation de situations associées à la présence de gaz dans un module de mesure de la consommation d'un liquide, le dispositif comportant un ou plusieurs capteurs aptes à acquérir des informations représentatives du débit d'un liquide passant au travers du module de mesure et des informations relatives à la présence de gaz dans le module de mesure et un calculateur selon l'invention.

Dans le contexte de la présente invention, et à titre d'exemple non limitatif, on entend par « capteur apte à acquérir des informations représentatives du débit d'un liquide passant au travers du module de mesure » tout composant ou combinaison de composants électroniques et/ou logiciels susceptible de mesurer une ou plusieurs grandeurs physiques dont la valeur est, directement ou indirectement, représentative du débit du liquide passant au travers du module de mesure. Il pourra par exemple s'agir d'un capteur à ultrason, un capteur électromagnétique, un capteur thermique ou tout autre type de capteur susceptible de réaliser une mesure statique ou mécanique du débit de liquide.

Dans le contexte de la présente invention, et à titre d'exemple non limitatif, on entend par « capteur apte à acquérir des informations relatives à la présence de gaz dans le module de mesure » tout composant ou combinaison de composants électroniques et/ou logiciels susceptible de mesurer une ou plusieurs grandeurs physiques dont la valeur est, directement ou indirectement, fonction de la présence d'un gaz dans un liquide passant au travers d'une canalisation du module de mesure. Il pourra par exemple s'agir d'un capteur à ultrason, un capteur électromagnétique, un capteur thermique, un capteur optique, un capteur acoustique, un capteur capacitif ou tout autre type de capteur susceptible de réaliser une détection statique de la présence d'un gaz dans un liquide.

On pourra également prévoir que le capteur apte à acquérir des informations représentatives du débit d'un liquide passant au travers du module de mesure et le capteur apte à acquérir des informations relatives à la présence de gaz dans le module de mesure soient formés par un même capteur, équipé d'une unité de calcul configurée pour déterminer lesdites informations relatives à la présence de gaz dans le module de mesure à partir des informations représentatives du débit d'un liquide passant au travers du module de mesure.

Dans un exemple de réalisation de l'invention, le dispositif selon l'invention et le module de mesure font partie d'un même équipement, notamment un compteur d'eau.

Dans un exemple de réalisation de l'invention, le dispositif comporte un capteur apte à acquérir des informations relatives à la température du liquide passant au travers du module de mesure.

Dans un mode de réalisation de l'invention, le dispositif comporte une interface de communication et le calculateur est configuré pour, à l'issue de la première période, transmettre les données stockées selon les structures de données de sa mémoire à l'interface de communication.

Dans le contexte de la présente invention, et à titre d'exemple non limitatif, on entend par « interface de communication » un ou plusieurs composants électroniques et/ou logiciels conçus pour échanger des données avec une unité de traitement de données distante du dispositif selon l'invention, de façon filaire ou sans-fil.

Avantageusement, l'interface de communication est configurée pour transmettre une requête au calculateur et le calculateur est configuré pour, à la réception de ladite requête, mettre en œuvre, pendant la première période et périodiquement selon une deuxième période inférieure à la première période, les étapes de détection, de stockage de données et pour transmettre les données stockées selon les structures de données de sa mémoire à l'interface de communication à la fin de la première période.

On pourra prévoir que l'interface de communication soit configurée pour transmettre périodiquement, selon ladite première période donnée, une requête au calculateur, le calculateur étant configuré pour transmettre les données stockées selon les structures de données de sa mémoire à l'interface de communication à la fin de chaque première période.

En variante, on pourra prévoir que l'interface de communication soit configurée pour transmettre une requête au calculateur à la réception d'une requête émise par un terminal distant.

Dans un mode de réalisation de l'invention, l'interface de communication comporte un module de communication sans-fil apte à échanger des données avec une unité de traitement de données distante du dispositif.

Par exemple, le module de communication sans-fil pourra être apte à émettre des trames de données sur un réseau de télécommunications à basse consommation, notamment de type LoRaWAN, à destination de l'unité de traitement de données distantes. On pourra envisager d'employer d'autres protocoles de communication sans-fil, notamment de type communication en champ proche ou NFC (de l'anglais « Near Field Communication »), voire d'employer un module de communication filaire ou câblée.

L'invention a également pour objet un système d'analyse de la consommation d'un liquide d'un réseau de distribution du liquide, le système comprenant un dispositif selon l'invention, un module de mesure de la consommation d'un liquide connecté audit réseau, et une unité de traitement de données distante du dispositif, l'interface de communication et l'unité de traitement étant apte à échanger des données et l'interface de communication étant configurée pour transmettre à l'unité de traitement les données reçues du calculateur à l'issue de la première période.

L'invention a également pour objet un procédé de caractérisation de situations associées à la présence de gaz dans un module de mesure de la consommation d'un liquide, le procédé comportant les étapes suivantes : réception d'informations représentatives du débit d'un liquide passant au travers du module de mesure et d'informations relatives à la présence de gaz dans le module de mesure ; détection, à partir des informations représentatives du débit du liquide passant au travers du module de mesure et des informations relatives à la présence de gaz dans le module de mesure pendant une première période donnée, d'une ou plusieurs occurrences d'une ou plusieurs situations au cours de ladite première période, parmi un ensemble de situations prédéterminées.

Dans un mode de réalisation de l'invention, le procédé est mis en œuvre par un calculateur selon l'invention.

L'invention a également pour objet un produit programme d'ordinateur comprenant des instructions qui, lorsque le programme est exécuté par un processeur, conduisent celui-ci à mettre en œuvre les étapes du procédé selon l'invention.

L'invention a encore pour objet un support de stockage lisible par ordinateur comprenant des portions de codes d'un programme d'ordinateur destiné à être exécuté par un processeur pour mettre en œuvre les étapes du procédé selon l'invention.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un système d'analyse de la consommation d'un liquide d'un réseau de distribution du liquide selon un mode de réalisation de l'invention ;
[Fig. 2] représente, schématiquement et partiellement, un procédé de caractérisations de situations associées à la présence de gaz dans le module de mesure de la consommation de la [Fig. 1] selon un mode de réalisation de l'invention ;
[Fig. 3] représente, schématiquement et partiellement, des mesures de débit et de détection d'air au sein du module de mesure de la consommation de la [Fig. 1] ; et
[Fig. 4] représente, schématiquement et partiellement, l'évolution de différentes structures de données stockées dans la mémoire du calculateur de la [Fig. 1] au fur et à mesure de la mise en œuvre du procédé de la [Fig. 2].

Dans la description qui suit, les éléments identiques, par structure ou par fonction, apparaissant sur différentes figures conservent, sauf précision contraire, les mêmes références.

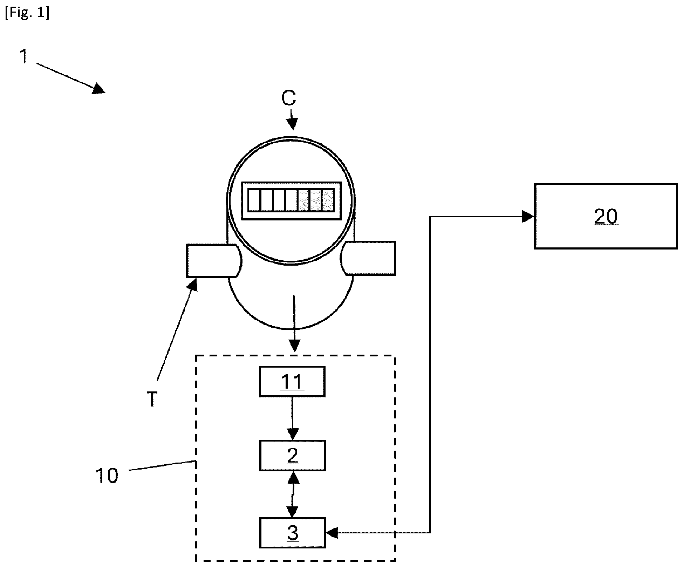

On a représenté en [Fig. 1] un système 1 d'analyse de la consommation d'un liquide d'un réseau de distribution du liquide.

Le système 1 comprend un dispositif 10 pour la caractérisation de situations associées à la présence de gaz dans un module de mesure de la consommation d'un liquide, ainsi qu'une unité de traitement de données 20 distante du dispositif 10.

Dans l'exemple de la [Fig. 1], le dispositif 10 selon l'invention et le module de mesure forment un même équipement, par exemple un compteur d'eau C d'un réseau de distribution hydraulique. Le compteur d'eau C est monté sur une canalisation T raccordant un réseau principal de distribution d'eau à un réseau secondaire local de distribution.

Le compteur d'eau C comporte un capteur 11 apte à acquérir des informations représentatives du débit d'eau, dans l'exemple décrit un débit Dᵢ, passant au travers du compteur C, ce débit étant représentatif du débit passant dans la canalisation T. Ce capteur 11 pourra indifféremment être un capteur à ultrason, un capteur électromagnétique, un capteur thermique ou tout autre type de capteur susceptible de réaliser une mesure statique du débit d'eau.

Le compteur C permet ainsi de mesurer la consommation d'eau, c'est-à-dire un débit de l'eau passant au travers du compteur C, de façon périodique, par exemple selon une période de l'échelle de la seconde de sorte que la mesure puisse être considérée comme une mesure en temps réel.

On pourra prévoir en variante que le capteur 11 mesure, de façon périodique, un volume d'eau passé au travers du compteur C depuis la dernière mesure, un volume cumulé d'eau passé au travers du compteur C, ou encore une vitesse d'écoulement d'eau au travers du compteur C. Ces mesures, représentatives du débit d'eau passant au travers du compteur C, permettent de calculer ce débit d'eau.

On notera que le dispositif 10 peut être adapté pour d'autres cas d'usage impliquant d'autres types de module de mesure, et notamment des modules d'acquisition d'informations représentatives du débit d'un autre liquide.

On pourra encore prévoir de déporter tout ou partie du dispositif 10 du module de mesure. Par exemple, le dispositif 10 peut comprendre le calculateur 2 et un module de communication apte à recevoir des informations d'un autre module de communication associé au capteur 11, pour recevoir les informations relatives au débit délivrées par ce capteur 11.

Le compteur C est également apte à déterminer, à partir des informations représentatives du débit, notamment des mesures du débit Dᵢ, des informations relatives à la présence de gaz dans le compteur.

Dans l'exemple décrit, le capteur 11 génère ainsi, indirectement, une mesure Gᵢ binaire indiquant la présence ou l'absence d'air dans le compteur C. On pourra prévoir que le capteur 11 génère des informations plus complexes, notamment indiquant la quantité d'air dans le compteur C.

On pourra prévoir, en variante, que le compteur C comporte par ailleurs un autre capteur apte à détecter la présence de gaz dans le module de mesure. Il pourra par exemple s'agir d'un capteur à ultrason apte à détecter la présence d'air dans le compteur C, ou en variante un capteur électromagnétique, un capteur thermique, un capteur optique, un capteur acoustique, un capteur capacitif ou tout autre type de capteur susceptible de réaliser une détection statique de la présence d'air ou d'un autre gaz dans le compteur C. Toujours en variante, on pourra prévoir que le compteur C comporte d'autres capteurs, comme un accéléromètre.

Le dispositif 10 comporte également un calculateur 2 équipé d'une mémoire. Dans l'exemple décrit, le calculateur 2 pourra être pourvu d'un ou plusieurs processeurs aptes à manipuler des données numériques pour effectuer des opérations mathématiques, des opérations logiques, des comparaisons. Le calculateur 2 est relié au capteur 11 pour recevoir les mesures représentatives du débit, par exemple les mesures de de débit Dᵢ et les mesures relatives à la présence de gaz Gᵢ.

Le calculateur 2 est également configuré pour lire et stocker des données dans ladite mémoire. La mémoire pourra comporter une mémoire vive ou RAM (de l'anglais « Random Access Memory »), une mémoire morte ou ROM (de l'anglais « Read-Only Memory »), une mémoire flash, une mémoire cache, un disque dur ou un disque SSD, voire une unité de stockage portable, comme une clé USB.

Dans l'exemple décrit, la mémoire est organisée selon plusieurs structures de données Mⱼ, chacune associée à une situation donnée parmi un ensemble de situations Sⱼ prédéterminées. En d'autres termes, des données relatives à une situation donnée peuvent être stockées dans la mémoire du calculateur 2, selon une structure de données Mⱼ propre à cette situation Sⱼ, dans des emplacements de ladite mémoire propres à cette situation Sⱼ. Le calculateur 2 peut ainsi stocker et modifier des données dans la mémoire selon chacune de ces structures Mⱼ, notamment en remplaçant ou en incrémentant des données dans un emplacement mémoire défini selon cette structure Mⱼ par d'autres données de même nature.

Dans l'exemple décrit, chaque structure de données Mⱼ définit une organisation de données selon une table ou un vecteur de données Mⱼ comportant cinq lignes, dont une première ligne indiquant le nombre d'occurrence Nb, pendant une période donnée, de présence de gaz liée à la situation Sⱼ associée à la structure Mⱼ, une deuxième ligne indiquant une durée en-cours Tec de présence de gaz liée à la situation Sⱼ associée à la structure Mⱼ, une troisième ligne indiquant la plus grande valeur Tm de durée de présence de gaz, pendant une période donnée, liée à la situation Sⱼ associée à la structure Mⱼ, une quatrième ligne indiquant une valeur de débit de fluide Dd, notamment la dernière valeur de débit de fluide, mesurée avant la présence de gaz, pendant une période donnée, liée à la situation Sⱼ associée à la structure Mⱼ et une cinquième ligne indiquant une durée cumulée Tc de présence de gaz, pendant une période donnée, liée à la situation Sⱼ associée à la structure Mⱼ.

Dans cet exemple, les structures Mⱼ sont ainsi semblables pour l'ensemble des situations Sⱼ, de sorte que des emplacements mémoires correspondant à deux lignes de même rang de deux structures M_{J} et M_{j'} comportent des données de même nature.

On pourra prévoir que les structures de données Mⱼ définissent des organisations de données distinctes, et notamment les structures de données Mⱼ soient distinctes d'une situation à une autre ou encore qu'elles nécessitent d'autres informations que celles qui ont été listées.

Dans l'exemple décrit, le dispositif 10 comporte également un module de communication sans-fil 3 relié au calculateur 2 pour échanger des informations avec ce calculateur 2, et notamment pour recevoir des données stockées en mémoire selon les structures de données Mⱼ.

Dans l'exemple décrit, le module de communication sans-fil 3 est apte à échanger des données, par exemple via un réseau de télécommunication à basse consommation de type LoRaWan, avec l'unité de traitement de données 20. L'unité de traitement de données 20 peut par exemple être une unité de traitement de données d'un opérateur de service ou d'un gestionnaire de parc.

On pourra envisager d'employer des modules de communication sans-fil opérant selon d'autres protocoles de communication sans-fil, notamment de type communication en champ proche ou NFC (de l'anglais « Near Field Communication »), voire d'employer un module de communication filaire ou câblée.

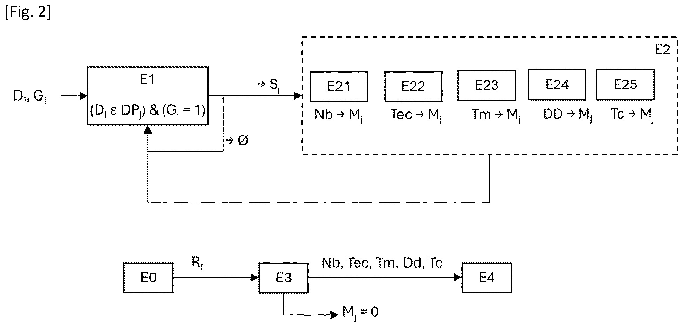

Le calculateur 2 du dispositif 10 est ainsi agencé pour mettre en œuvre un procédé de caractérisation de situations associées à la présence de gaz dans un module de mesure de la consommation d'un liquide. Un exemple de réalisation de ce procédé selon l'invention va être décrit en liaison avec la [Fig. 2].

De façon autonome, le calculateur 2 met en œuvre, de façon périodique selon une période P₂, des étapes de détection de situations E1 et de stockage de données E2, ainsi qu'une étape de transmission de données E3 au module de communication sans-fil 3 à l'issue d'une période P₁ au cours de laquelle plusieurs itérations des étapes E1 et E2 ont eu lieu.

Tel que cela va être décrit, les étapes de détection E1 et de stockage E2 sont ainsi réitérées périodiquement selon la deuxième période P₂ inférieure à la première période P₁, et l'étape de transmission E3 est mise en œuvre à la fin de la première période P₁. Les périodes P₁ et P₂ pourront être définies par une même horloge du dispositif 10 ou par deux horloges distinctes du module de communication sans-fil 3 et du calculateur 2, de sorte qu'elles pourront indifféremment être synchrones ou asynchrones.

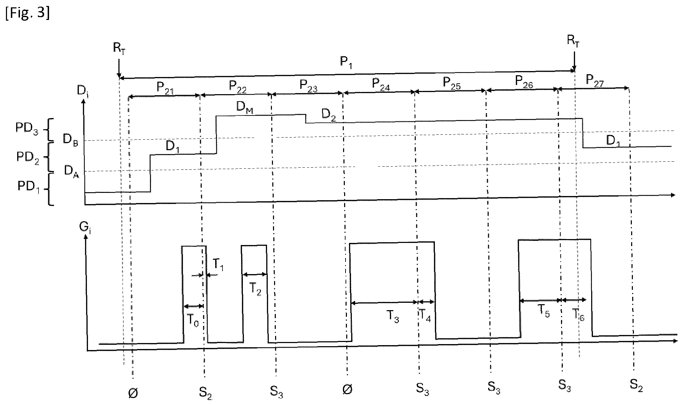

Pendant chaque deuxième période P₂, les données Dᵢ et Gᵢ mesurées par le capteur 11 sont transmises au calculateur 2 et stockées, par exemple dans la mémoire, tout le long de ladite période P₂. La [Fig. 3] représente ainsi une séquence de données Dᵢ et Gᵢ relevées par le capteur 11 pendant plusieurs périodes P₂.

On pourra prévoir, en variante, que les données Dᵢ et Gᵢ mesurées par le capteur 11 sont transmises au calculateur 2 seulement en cas de détection de gaz, par exemple lorsque la mesure Gᵢ est à une valeur « 1 », voire seulement de façon ponctuelle, sur requête du calculateur 2.

A la fin de chaque deuxième période P₂, dans une étape E1, le calculateur 2 détecte, à partir des données Dᵢ et Gᵢ mesurées pendant cette période P₂, l'occurrence pendant cette période P₂ d'une situation Sⱼ parmi l'ensemble de situations prédéterminées Sⱼ. Afin de pouvoir réaliser la caractérisation de ces situations, chaque situation Sⱼ est associée à une plage de débit PDⱼ auquel est comparé le débit Dᵢ mesuré par le premier capteur 11. L'occurrence d'une situation Sⱼ est ainsi détectée par le calculateur 2 si le débit Dᵢ est, à un instant donné de la période P₂, dans la plage PDⱼ et si la mesure Gᵢ indique que de l'air est présent dans la canalisation T, dans la période P₂, voire au même instant.

En revanche, si les mesures Gᵢ indiquent l'absence de gaz tout le long de la période P₂, le calculateur 2 ne détecte aucune occurrence d'une quelconque situation Sⱼ dudit ensemble pendant cette période P₂, de sorte qu'aucune autre opération du procédé n'est effectuée pour cette période P₂.

Dans l'exemple de la [Fig. 3], ledit ensemble comporte trois situations prédéterminées S₁, S₂ et S₃. La première situation S₁ est associée à une plage PD₁ de débit strictement positif et inférieur strictement à une valeur D_{A} ; D_{A} étant une première valeur seuil paramétrable au niveau du calculateur 2. La deuxième situation S₂ est associée à une plage PD₂ : [D_{A} D_{B}[ ; où D_{B} est une deuxième valeur seuil paramétrable au niveau du calculateur 2, supérieure à la première valeur seuil D_{A}. La troisième situation S₃ est associée à une plage PD₃ de débit supérieur ou égal à la valeur D_{B}.

Combinées à la présence de gaz, ces plages permettent de détecter chacune des situations S₁, S₂ et S₃, ce qui permet de caractériser la situation de présence d'air.

Dans le cas de présence d'air, la situation S₁ indique ainsi une situation de plein air selon laquelle le compteur d'eau est rempli totalement ou quasiment d'air, cette situation pouvant être provoquée par une rupture de la distribution d'eau. La situation S₂ indique une situation dans laquelle il ne devrait pas y avoir de cavitation pour la plage PD₂ de débit considérée, au regard de la conception du compteur C, sauf à considérer une distribution de gaz involontaire de la part du distributeur d'eau ou d'une fraude d'un usager ou encore d'un appareil sur le réseau causant une cavitation involontaire. Enfin, la situation S₃ indique une situation dans laquelle la conception du compteur C n'est pas adaptée pour opérer, c'est-à-dire au-delà des maximum attendus pour un rendement optimal, et dans laquelle une apparition de gaz pourrait être liée par exemple à une cavitation, indépendamment d'une arrivée de gaz via le réseau d'eau.

On pourra prévoir un nombre différent de plages de débit PDⱼ et/ou de discriminer les situations S_{J} avec des informations supplémentaires délivrées par d'autres capteurs du dispositif 10, comme un capteur de température au sein de la canalisation T.

Comme représenté en [Fig. 3], le débit Dᵢ mesuré par le premier capteur 11 varie ainsi entre une valeur D₁, comprise dans la plage [D_{A} D_{B}[ , une valeur D₂ supérieure à la valeur D_{B} et une valeur D_{M} de débit maximal pouvant être mesuré par le premier capteur 11. Le calculateur 2 détecte ainsi successivement, à la fin de chaque période P₂, matérialisée en [Fig. 3] par périodes P₂₁ à P₂₇, des occurrences des situations S₂ et S₃, à l'exception de la période P₂₃ où aucune occurrence n'est détectée.

Dans une étape E2, à la fin de chaque période P₂, le calculateur 2 stocke alors, selon la structure de données Mⱼ associée à la situation Sⱼ dont une occurrence a été détectée pendant cette période P₂, des données représentatives du débit d'eau passant au travers du compteur C et à la durée de présence de gaz dans le compteur C, ces données caractérisant l'occurrence de cette situation Sⱼ. Ces données sont déterminées par le calculateur 2 à partir des données Dᵢ et Gᵢ stockées pendant cette période P₂.

Plus précisément, pour chaque période P₂, dans une sous-étape E21, le calculateur 2 incrémente le compteur d'occurrence de présence de gaz Nb stocké selon la structure de données Mⱼ associée à la situation Sⱼ dont une occurrence a été détectée pendant cette période P₂. Dans l'exemple décrit, dans le cas d'une continuité de présence d'air entre la période P₂ et la période P₂ précédente, notamment telle qu'indiquée par la valeur Tec, le calculateur 2 ne procède à aucune incrémentation du compteur Nb. A la fin de la période P₁, un emplacement mémoire défini par chaque structure de données Mⱼ contient ainsi un compteur Nb indiquant le nombre d'occurrences de la situation Sⱼ depuis le début de la période P₁.

Séquentiellement ou simultanément, pour chaque période P₂, dans une sous-étape E22, le calculateur 2 incrémente la valeur Tec stockée selon la structure de données Mⱼ associée à la situation Sⱼ dont une occurrence a été détectée pendant cette période P₂, avec la durée de présence d'air liée à la situation Sⱼ pendant la période P₂, dans le cas où la mesure Gᵢ indique une présence d'air à l'instant correspondant à la fin de cette période P₂, ou la remplace par une valeur nulle dans le cas contraire. Cette valeur Tec correspond à la durée de présence d'air liée à la situation Sⱼ depuis l'apparition de l'air dans le compteur C jusqu'à cet instant correspondant à la fin de cette période P₂, et peut être estimée par le calculateur 2 en déterminant la durée où la mesure Gᵢ a une valeur de 1 et où le débit Dᵢ est compris dans la plage PDⱼ associée à la situation Sⱼ. A la fin de la période P₁, un emplacement mémoire défini par chaque structure de données Mⱼ contient ainsi une valeur Tec indiquant si une situation Sⱼ est en cours et depuis combien de temps, notamment afin d'assurer une continuité dans l'horodatage entre cette période P₁ et une période P₁ suivante.

Séquentiellement ou simultanément, pour chaque période P₂, dans une sous-étape E23, le calculateur 2 détermine la plus grande valeur entre la valeur Tm stockée selon la structure de données Mⱼ associée à la situation Sⱼ dont une occurrence a été détectée pendant la période P₁ actuelle, et la durée de présence d'air liée à cette occurrence de situation Sⱼ pendant cette période P₂. En d'autres termes, le calculateur 2 détermine la plus grande durée continue de présence d'air dans le compteur C pendant la période P₁, notamment en tenant compte des continuités de présence d'air entre deux périodes P₂ consécutives. Ladite durée de présence d'air pendant la période P₂ pourra être estimée de la même façon que pour la sous-étape E22, en prenant en compte une continuité de présence d'air entre la période P₂ et la période P₂ précédente, notamment telle qu'indiquée par la valeur Tec. Le calculateur 2 remplace ensuite la valeur Tm stockée selon la structure de données Mⱼ par cette valeur. A la fin de la période P₁, un emplacement mémoire défini par chaque structure de données Mⱼ contient ainsi une valeur Tm indiquant la durée maximale de présence d'air pour toutes les occurrences de la situation Sⱼ associée pendant cette période P₁.

Séquentiellement ou simultanément, pour chaque période P₂, dans une sous-étape E24, le calculateur 2 remplace la valeur Dd stockée selon la structure de données Mⱼ associée à la situation Sⱼ dont une occurrence a été détectée pendant cette période P₂, par la dernière valeur Dᵢ de débit de fluide mesurée par le premier capteur 11 avant l'apparition d'air dans le compteur C et dont la présence est liée à la situation Sⱼ. L'intervalle de temps dans lequel cette dernière valeur est sélectionnée est déterminé par le calculateur 2 en sélectionnant l'intervalle de la période P₂ dans lequel la mesure Gᵢ a une valeur de 1. A la fin de la période P₁, un emplacement mémoire défini par chaque structure de données Mⱼ contient ainsi une valeur Dd indiquant la dernière valeur des débits mesurés pendant cette période P₁ avant chaque occurrence de présence d'air dans le compteur C, liée à la situation Sⱼ associée.

Séquentiellement ou simultanément, pour chaque période P₂, dans une sous-étape E25, le calculateur 2 détermine la somme de la valeur Tc stockée selon la structure de donnée Mⱼ associée à la situation Sⱼ dont une occurrence a été détectée pendant la période P₁ actuelle, et la durée de présence d'air lié à cette situation Sⱼ pendant cette période P₂. Ladite durée de présence d'air pendant la période P₂ pourra être estimée de la même façon que pour la sous-étape E22. Le calculateur 2 remplace ensuite la valeur Tc stockée selon la structure de données Mⱼ associée à la situation Sⱼ dont une occurrence a été détectée pendant cette période P₂ par le résultat de cette somme. A la fin de la période P₁, un emplacement mémoire défini par chaque structure de données Mⱼ contient ainsi une valeur Tc indiquant le cumul de l'ensemble des durées de présence d'air liée à la situation Sⱼ associée pendant la première période P₁.

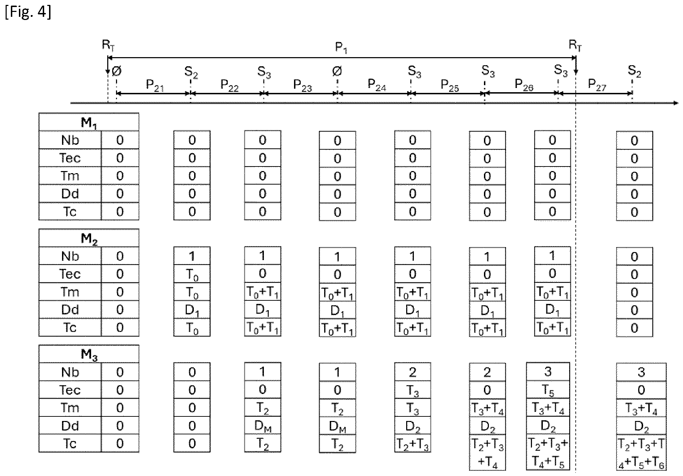

La [Fig. 4] représente l'évolution de chacune des structures de données M₁, M₂ et M₃ au regard des mesures Dᵢ et Gᵢ relevées par les capteurs 11 et 12 et des détections des occurrences des situations S₁, S₂ et S₃, telles que représentées en [Fig. 3].

Il est supposé qu'au préalable de la première période P₂₁, au début de la période P₁, les emplacements mémoire définis par chacune des structures de données M₁, M₂ et M₃ sont initialisés avec des valeurs nulles, sauf la donnée Tec selon qu'il y ait ou non une présence d'air continue entre une période précédente et la période P₁. Dans l'exemple décrit, la donnée Tec est initialisée avec une valeur nulle, du fait de l'absence de continuité de présence d'air.

Suivant la détection de la première occurrence de la situation S₂, à l'issue de la période P₂₁, le calculateur 2 :
a. incrémente de 1 le compteur Nb selon la structure M₂;
b. stocke dans la donnée Tec selon M₂ la durée T₀ correspondant à la durée en cours de présence d'air liée à la situation S₂ à l'issue de cette période P₂₁ ;
c. stocke dans la donnée Tm selon M₂ la durée T₀ correspondant à la durée de présence d'air liée à la situation S₂ pendant cette période P₂₁ ;
d. stocke dans la donnée Dd selon M₂ la dernière valeur D₁ de débit de fluide mesurée par le premier capteur 11 avant l'apparition d'air lié à la situation S₂ pendant cette période P₂₁ ;
e. stocke dans la donnée Tc selon M₂ la durée T₀ correspondant au cumul des durées de toutes les présences d'air liées à la situation S₂ pendant la période P₁.

Les emplacements mémoire définis par les autres structures M₁ et M₃ restent inchangée.

Suivant la détection de la deuxième occurrence de la situation S₂, à l'issue de la période suivante P₂₂, le calculateur 2 :
a. maintient à la même valeur le compteur Nb selon la structure M₂, la présence de gaz étant continue entre la période P₂₁ et la période P₂₁ ;
b. stocke dans la donnée Tec selon M₂ une valeur nulle, aucune occurrence de la situation S₂ n'étant en cours à l'issue de cette période P₂₂ ;
c. ajoute à la donnée Tm selon M₂ la durée T₁, la présence de gaz étant continue entre la période P₂₁ et la période P₂₁ ;
d. maintient dans la donnée Dd selon M₂ la valeur D₁ de débit de fluide ;
e. stocke dans la donnée Tc selon M₂ la durée T₀+T₁ correspondant au cumul des durées de toutes les présences d'air liées à la situation S₂ pendant la période P₁.

En outre, suivant la détection de la première occurrence de la situation S₃, à l'issue de cette période P₂₂, le calculateur 2 :
a. incrémente de 1 le compteur Nb selon la structure M₃ ;
b. stocke dans la donnée Tec selon M₃ une valeur nulle, aucune occurrence de la situation S₃ n'étant en cours à l'issue de cette période P₂₂ ;
c. stocke dans la donnée Tm selon M₃ la durée T₂ correspondant à la durée de présence d'air liée à la situation S₃ pendant cette période P₂₂ ;
d. stocke dans la donnée Dd selon M₃ la dernière valeur D_{M} de débit de fluide mesurée par le premier capteur 11 avant l'apparition d'air lié à la situation S₃ pendant cette période P₂₂ ;
e. stocke dans la donnée Tc selon M₃ la durée T₂ correspondant au cumul des durées de toutes les présences d'air liées à la situation S₃ pendant la période P₁.

Les emplacements mémoire définis par la structure M₁ restent inchangés.

A l'issue de la période suivante P₂₃, aucune occurrence d'une des situations S₁, S₂ et S₃ n'a été détectée. Les emplacements mémoire définis par les structures M₁, M₂ et M₃ restent inchangés.

Suivant la détection de la deuxième occurrence de la situation S₃, à l'issue de la période suivante P₂₄, le calculateur 2 :
a. incrémente de 1 le compteur Nb selon la structure M₃ ;
b. remplace la valeur nulle de la donnée Tec selon M₃ par la durée T₃ correspondant à la durée en cours de présence d'air liée à la situation S₃ à l'issue de cette période P₂₄ ;
c. remplace la valeur T₂ dans la donnée Tm selon M₃ par la durée T₃ correspondant à la durée de de présence d'air liée à la situation S₃ pendant cette période P₂₄, la durée T₃ étant supérieure à la durée T₂ ;
d. remplace la valeur D_{M} de la donnée Dd selon M₃ par la dernière valeur D₂ de débit de fluide mesurée pendant la période P₂₄ par le premier capteur 11 avant l'apparition d'air lié à la situation S₃
e. stocke dans la donnée Tm selon M₃ la durée T₂ + T₃ correspondant au cumul des durées de toutes les présences d'air liées à la situation S₃ pendant la période P₁.

Les emplacements mémoire définis par les autres structures M₁ et M₂ restent inchangés.

Suivant la détection de la troisième occurrence de la situation S₃, à l'issue de la période suivante P₂₅, le calculateur 2 :
a. maintient à la même valeur le compteur Nb selon la structure M₃, la présence de gaz étant continue entre la période P₂₅ et la période P₂₄ ;
b. remplace la valeur T₃ de la donnée Tec selon M₃ par une valeur nulle, aucune occurrence de la situation S₃ n'étant en cours à l'issue de cette période P₂₅ ;
c. ajoute à la valeur T₃ dans la donnée Tm selon M₃, la durée T₄ correspondant à la durée de présence d'air liée à la situation S₃ pendant cette période P₂₅, la présence de gaz étant continue entre la période P₂₅ et la période P₂₄ ;
d. maintient la valeur D₂ de la donnée Dd selon M₃, ;
e. stocke dans la donnée Tm selon M₃ la durée T₂ + T₃ + T₄ correspondant au cumul des durées de toutes les présences d'air liées à la situation S₃ pendant la période P₁.

Les emplacements mémoire définis par les autres structures M₁ et M₂ restent inchangés.

Suivant la détection de la quatrième occurrence de la situation S₃, à l'issue de la période suivante P₂₆, le calculateur 2 :
a. incrémente de 1 le compteur Nb selon la structure M₃ ;
b. remplace la valeur nulle de la donnée Tec selon M₃ par la durée T₅ correspondant à la durée en cours de présence d'air liée à la situation S₃ à l'issue de cette période P₂₆ ;
c. maintient la valeur T₃+T₄ dans la donnée Tm selon M₃, la durée T₅ correspondant à la durée de présence d'air liée à la situation S₃ pendant cette période P₂₆ étant inférieure à cette durée T₃+T₄ ;
d. maintient la valeur D₂ de la donnée Dd selon M₃ ;
e. stocke dans la donnée Tm selon M₃ la durée T₂ + T₃ + T₄ + T₅ correspondant au cumul des durées de toutes les présences d'air liées à la situation S₃ pendant la période P₁.

Les emplacements mémoire définis par les autres structures M₁ et M₂ restent inchangés.

A l'issue de la première période P₁, dans une étape E0, le module de communication sans-fil 3 transmet une requête R_{T} au calculateur 2.

La réception de cette requête R_{T} par le calculateur 2 entraîne d'une part, dans une étape E3, la transmission des données Nb, Tec, Tm, Dd et Tc stockées en mémoire selon les structures de données Mⱼ par le calculateur 2 tout le long de cette période P₁, au module de communication sans-fil 3.

La réception de cette requête R_{T} par le calculateur 2 entraîne d'autre part la réinitialisation dans sa mémoire des emplacements mémoire correspondant aux données Nb, Tm, Dd et Tc définis par toutes les structures de données Mⱼ avec des valeurs nulles. La donnée Tec n'est en revanche pas réinitialisée compte tenu d'une présence d'air continue entre la fin de la période P₁ et le démarrage de la période P₁ suivante.

On notera ainsi qu'à l'issue de l'itération suivante, pour la période P₂₇, le calculateur 2 poursuivra ainsi les écritures en mémoire des données Nb, Tec, Tm, Dd et Tc en conservant la continuité des situations de la période P₁ précédente.

On comprend ainsi que les étapes E1, E2 sont réitérées périodiquement, selon la période P₂, en partant d'emplacements mémoire définis par les structures Mⱼ vides, sauf pour la donnée Tec selon qu'il y ait ou non continuité de présence d'air entre deux périodes P₁ consécutives, comme montré en [Fig. 3] et [Fig. 4].

Chaque réception d'une nouvelle requête R_{T} émise par le module 3 au calculateur 2 déclenche donc une lecture des emplacements mémoire définis par les structures de données Mⱼ suivie d'une réinitialisation de tout ou partie de ces emplacements mémoire pour être remplis de nouveau par le calculateur 2 pour une nouvelle période P₁. Dans l'exemple décrit, les requêtes R_{T} sont ainsi émises de façon périodique par le module 3.

On pourra en variante prévoir que la totalité des emplacements mémoires soit réinitialisée ou encore que les emplacements mémoires soient réinitialisés seulement en l'absence d'air pendant l'intégralité d'une période P₁. Dans ce dernier cas, le calculateur 2 continue ainsi d'écrire en mémoire selon les structures de données Mⱼ d'une période P₁ à une autre.

Dans une étape E4, le module de communication sans-fil 3 transmet les données Nb, Tec, Tm, Dd et Tc à l'unité de traitement de données 20.

On pourra envisager que le calculateur 2 détermine d'autres types de données permettant de caractériser l'occurrence d'une situation Sⱼ, à partir des mesures relevées par les différents capteurs du dispositif 10 au cours de chaque période P₂, afin de remplacer, de cumuler, de modifier ou de combiner les informations stockées selon la structure Mⱼ associée à cette situation Sⱼ à l'aide de ces données.

La description qui précède explique clairement comment l'invention permet d'atteindre les objectifs qu'elle s'est fixée, à savoir obtenir, caractériser différentes situations liées à la présence de gaz dans un module de mesure de la consommation de fluide et au débit du fluide, tout en maîtrisant la quantité des données transmises par le module de mesure. Ces objectifs sont atteints en discriminant, au niveau du module de mesure de la consommation d'un fluide, ces différentes situations, puis en les caractérisant dans des structures de données synthétiques dédiées qui peuvent être fournies à une unité de traitement distant pour y être exploitées par un gestionnaire.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Calculateur (2) pour la caractérisation de situations associées à la présence de gaz dans un module de mesure (C) de la consommation d'un liquide, le calculateur étant apte à recevoir des informations (Dᵢ) représentatives du débit d'un liquide passant au travers du module de mesure et des informations (Gᵢ) relatives à la présence de gaz dans le module de mesure ;
le calculateur étant configuré pour détecter, à partir des informations représentatives du débit du liquide passant au travers du module de mesure et des informations relatives à la présence de gaz dans le module de mesure pendant une première période donnée (P₁), la ou les occurrences d'une ou plusieurs situations (Sⱼ) au cours de ladite première période, parmi un ensemble de situations prédéterminées (Sⱼ).

2. Calculateur (2) selon la revendication précédente, caractérisé en qu'il est configuré pour détecter ladite ou lesdites occurrences d'une ou plusieurs situations (Sⱼ) lorsque les informations (Gᵢ) relatives à la présence de gaz dans le module de mesure (C) indiquent qu'un gaz est présent dans le module de mesure et par comparaison des informations (Dᵢ) représentatives du débit du liquide passant au travers du module de mesure à une ou plusieurs plages de valeurs prédéterminées (PDⱼ), chaque plage étant associée à l'une des situations prédéterminées (Sⱼ) dudit ensemble.

3. Calculateur (2) selon l'une des revendications précédentes, **caractérisé en ce qu'**il est apte à recevoir des informations relatives à la température du liquide passant au travers du module de mesure (C), et **en ce qu'**il est configuré pour détecter, à partir des informations (Dᵢ) représentatives du débit du liquide et à la température du liquide passant au travers du module de mesure et des informations (Gᵢ) relatives à la présence de gaz dans le module de mesure pendant ladite première période (P₁), ladite ou lesdites occurrences d'une ou plusieurs situations (Sⱼ) au cours de ladite première période, parmi ledit ensemble de situations prédéterminées (Sⱼ).

4. Calculateur (2) selon l'une des revendications précédentes, **caractérisé en ce qu'**il comporte une mémoire et **en ce qu'**il est configuré pour stocker, en fonction de chaque situation (Sⱼ) détectée, des données (Nb, Tec, Tm, Dd, Tc) représentatives du débit du liquide passant au travers du module de mesure (C) et à la durée de présence de gaz dans le module de mesure selon une structure de données (Mⱼ) de ladite mémoire, ladite structure de données étant associée à ladite situation détectée.

5. Calculateur (2) selon la revendication précédente, **caractérisé en ce qu'**il est configuré pour détecter ladite ou lesdites occurrences d'une ou plusieurs situations (Sⱼ) à partir des informations (Dᵢ) représentatives du débit du liquide passant au travers du module de mesure (C) et des informations (Gᵢ) relatives à la présence de gaz dans le module de mesure pendant la période précédant chaque étape de stockage, et pour stocker, à l'issue de ladite période, lesdites données (Nb, Tec, Tm, Dd, Tc) représentatives du débit du liquide passant au travers du module de mesure et à la durée de présence de gaz dans le module de mesure selon ladite structure de données (Mⱼ) associée à ladite situation détectée.

6. Calculateur (2) selon la revendication précédente, **caractérisé en ce qu'**il est configuré, lors de la mise en œuvre de chaque étape de stockage, pour remplacer tout ou partie des données (Nb, Tec, Tm, Dd, Tc) stockées selon ladite structure de données (Mⱼ) associée à la situation détectée (Sⱼ), par une ou plusieurs données déterminées à partir de tout ou partie des informations (Dᵢ) représentatives du débit du liquide passant au travers du module de mesure (C) et des informations (Gᵢ) relatives à la présence de gaz dans le module de mesure pendant ladite période précédant cette étape de stockage.

7. Calculateur (2) selon la revendication 6, **caractérisé en ce qu'**il est configuré, lors de la mise en œuvre de chaque étape de stockage, pour remplacer une donnée (Dd) représentative du débit du liquide passant au travers du module de mesure (C), stockée selon ladite structure de données (Mⱼ) associée à la situation détectée (Sⱼ), par une donnée représentative du débit du liquide passant au travers du module de mesure pendant ladite période précédant cette étape de stockage.

8. Calculateur (2) selon l'une des revendications 6 ou 7, **caractérisé en ce qu'**il est configuré, lors de la mise en œuvre de chaque étape de stockage, pour incrémenter un compteur d'occurrence (Nb) stocké selon ladite structure de données (Mⱼ) associée à la situation détectée (Sⱼ).

9. Calculateur (2) selon l'une des revendications 6 à 8, **caractérisé en ce qu'**il est configuré, lors de la mise en œuvre de chaque étape de stockage, pour remplacer une valeur (Tm) d'une durée d'occurrence stockée selon ladite structure de données (Mⱼ) associée à la situation détectée (Sⱼ), par la plus grande valeur entre cette valeur stockée et une durée de présence de gaz dans le module de mesure (C) pendant ladite période précédant cette étape de stockage, cette durée de présence étant estimée à partir des informations (Gᵢ) relatives à la présence de gaz dans le module de mesure.

10. Calculateur (2) selon l'une des revendications 6 à 9, **caractérisé en ce qu'**il est configuré, lors de la mise en œuvre de chaque étape de stockage, pour remplacer une valeur d'une durée cumulée (Tc) stockée selon ladite structure de données (Mⱼ) associée à la situation détectée (Sⱼ), par la somme de cette valeur stockée et une durée de présence de gaz dans le module de mesure (C) pendant ladite période précédant cette étape de stockage, cette durée de présence étant estimée à partir des informations (Gᵢ) relatives à la présence de gaz dans le module de mesure.

11. Calculateur (2) selon l'une des revendications 6 à 10, **caractérisé en ce qu'**il est configuré, lors de la mise en œuvre de chaque étape de stockage et lorsque les informations (Gᵢ) relatives à la présence de gaz dans le module de mesure (C) indiquent qu'un gaz est présent dans le module de mesure à l'instant correspondant à la fin de la période précédant cette étape de stockage, pour remplacer une valeur (Tec) d'une durée en-cours stockée selon ladite structure de données (Mⱼ) associée à la situation détectée (Sⱼ), par une durée de présence de gaz dans le module de mesure jusqu'audit instant, cette durée de présence étant estimée à partir des informations (Gᵢ) relatives à la présence de gaz dans le module de mesure.

12. Calculateur (2) selon l'une des revendications 4 à 11, **caractérisé en ce qu'**il est configuré pour, au début et/ou à l'issue de la première période (P₁), pour réinitialiser tout ou partie des emplacements en mémoire correspondant à chacune des structures de données (Mⱼ) associées aux situations dudit ensemble (Sⱼ).

13. Dispositif (10) pour la caractérisation de situations associées à la présence de gaz dans un module de mesure (C) de la consommation d'un liquide, comprenant :
a. un ou plusieurs capteurs (11) aptes à acquérir des informations (Dᵢ) représentatives du débit d'un liquide passant au travers du module de mesure et des informations (Gᵢ) relatives à la présence de gaz dans le module de mesure ;
b. un calculateur (2) selon l'une des revendications précédentes.

14. Dispositif (10) selon la revendication précédente, dans lequel le calculateur (2) est un calculateur selon l'une des revendications 4 à 12, **caractérisé en ce qu'**il comporte une interface de communication (3) ; et **en ce que** le calculateur est configuré pour, à l'issue de la première période (P₁), transmettre les données (Nb, Tec, Tm, Dd, Tc) stockées selon les structures de données (Mⱼ) de sa mémoire à l'interface de communication.

15. Système d'analyse (1) de la consommation d'un liquide d'un réseau de distribution du liquide, le système comprenant un dispositif (10) selon la revendication 14, un module de mesure (C) de la consommation d'un liquide connecté audit réseau, et une unité (20) de traitement de données distante du dispositif, l'interface de communication (3) et l'unité de traitement étant apte à échanger des données et l'interface de communication étant configurée pour transmettre à l'unité de traitement les données (Nb, Tec, Tm, Dd, Tc) reçues du calculateur (2) à l'issue de la première période (P₁).

16. Procédé de caractérisation de situations associées à la présence de gaz dans un module de mesure (C) de la consommation d'un liquide, le procédé étant mis en œuvre par un calculateur (2) selon l'une des revendications 1 à 12.
